# DEMANDE DE BREVET EUROPEEN

(11) **EP 1 044 827 A1**
(43) Date de publication de la demande: **18.10.2000**
(21) Numéro de dépôt: 00105287.7
(22) Date de dépôt: 14.03.2000
(51) Int. Cl.: B60B 1/00, B60B 5/02

(54) **Rayon réalisé en matériau composite pour une roue, et roue de bicyclette équipée desdits rayons**

(30) Priorité: 16.04.1999 FR 9904934
(71) Demandeur: MAVIC S.A., 01990 Saint-Trivier sur Moignans (FR)
(72) Inventeur: Manon, Sylvain, 38120 Saint Egreve (FR); Mercat, Jean-Pierre, 01400 Chatillon sur Chalaronne (FR); Renard, Philippe, 74330 La Balme de Sillingy (FR)
(74) Mandataire: Lejeune, Benoit

(57) **Abrégé**

L'invention concerne un rayon composite pour une roue à rayons comprenant un corps médian (1) allongé et deux extrémités d'accrochage (2, 3) réalisés en fibres enduites de résine, les fibres étant disposées de façon à former une boucle à au moins l'une des extrémités d'accrochage. Le rayon est caractérisé par le fait que la boucle est formée autour d'un noyau de renflement (4, 5) qui est emprisonné à l'intérieur de la boucle, de telle façon que la boucle soit pleine et qu'au moins localement, selon une direction donnée, elle présente en section une dimension supérieure à la dimension de la zone contiguë du corps.

L'invention concerne également un embout d'accrochage du rayon, un moyeu et une roue complète.

Un rayon est accroché par sa grosse boucle (2) dans l'une des ouvertures du moyeu, sa petite boucle (3) est logée dans la tête (40) d'un embout, la tête étant logée dans l'évidement d'une vis creuse (44) vissée dans l'orifice taraudé de la jante.

## Description

L'invention concerne un rayon réalisé en matériau composite pour une roue à rayon travaillant en traction, notamment une roue de bicyclette. L'invention concerne également un embout d'accrochage dudit rayon, un moyeu prévu pour l'accrochage dudit rayon ainsi qu'une roue de bicyclette équipée desdits rayons desdits embouts et dudit moyeu.

On connaît d'après la demande de brevet publiée sous le numéro EP 872 357 un rayon composite formé par une fibre enroulée selon plusieurs spires et noyée dans une matrice de résine. A chacune des extrémités, l'enroulement présente un retour en demi-cercle qui sert à l'accrochage du rayon à la jante ou au moyeu. L'organe d'accrochage présente une goupille ou un autre élément qui retient l'enroulement par l'intérieur. Un tel rayon présente l'avantage d'une grande résistance à la traction, et d'une grande endurance à l'étirement. En cela, il présente des performances améliorées par rapport aux autres rayons composites connus qui présentent aux extrémités un noeud ou une portion sertie dans un embout d'accrochage.

Dans une demande de brevet non publiée à la date de dépôt de la présente demande, la demanderesse a décrit un rayon composite avec une partie centrale formée de deux portions de ruban dont les bords se recouvrent et sont accolées pour former deux demies boucles à chacune des extrémités du rayon. Ici encore, l'accrochage des rayons est prévu par l'intermédiaire des demies boucles depuis leur intérieur.

Ce mode d'accrochage des rayons par l'intérieur est particulièrement résistant. Toutefois, il s'avère délicat à mettre en oeuvre. Un accrochage par l'intérieur génère en effet à l'intérieur de la boucle des contraintes localement élevées qu'il est difficile de maîtriser. En outre, les dispositifs d'accrochage du rayon à la jante et au moyeu nécessitent plusieurs pièces à assembler entre elles ce qui est dû au fait que le rayon est une boucle fermée qu'il faut accrocher à la jante et le moyeu à la manière d'un maillon de chaîne.

Un but de l'invention est de proposer un rayon composite amélioré qui améliore les conditions d'accrochage du rayon à la jante et au moyeu.

Un autre but est de proposer un rayon qui soit résistant à la traction et à la fatigue en étirement.

Un autre but est de proposer un embout d'accrochage d'un rayon composite qui assure un accrochage fiable dudit rayon en traction et à l'étirement et qui permette un réglage de tension du rayon.

Un autre but de l'invention est de proposer un moyeu qui permette un accrochage simple et résistant pour ledit rayon composite.

Un autre but est de proposer une roue de bicyclette à rayons composites dont le montage est simplifié, et dont les rayons présentent par ailleurs une grande résistance à la traction et à la fatigue.

D'autres buts et avantages de l'invention apparaîtront au cours de la description qui va suivre.

Le rayon composite pour une roue à rayons selon l'invention comprend un corps médian allongé et deux extrémités d'accrochage réalisés en fibres enduites de résine, les fibres étant disposées de façon à former une boucle à au moins l'une des extrémités d'accrochage, le corps ayant en section des dimensions déterminées dans une zone contiguë à la boucle. Il est caractérisé par le fait que la boucle est formée autour d'un noyau de renflement qui est emprisonné à l'intérieur de la boucle, de telle façon que la boucle soit pleine et qu'au moins localement, selon une direction transversale, elle présente en section une dimension supérieure à la dimension de la zone du corps contiguë à la boucle.

L'embout d'accrochage selon l'invention présente une tête cylindrique de révolution comprenant un évidement transversal débouchant vers une extrémité de la tête par une embouchure transversale de largeur réduite par rapport à la dimension maximale en largeur du logement, et une vis creuse filetée extérieurement sur au moins une partie de sa longueur présentant intérieurement un logement cylindrique prévu pour recevoir la tête et un épaulement pour la retenir selon une direction axiale.

Le moyeu selon l'invention comprend un corps de moyeu et deux joues latérales pourvues à leur périphérie de perçages prévus pour l'accrochage des rayons. Il est caractérisé par le fait que chacun des perçages présente une ouverture qui a une grande dimension orientée dans un plan perpendiculaire à la direction axiale du moyeu, et une petite dimension dans une direction sensiblement perpendiculaire à celle de la grande dimension.

La roue selon l'invention comprend une jante, un moyeu central et au moins un rayon comprenant un corps médian allongé et deux extrémités d'accrochage réalisés en fibres enduites de résine, les fibres étant disposées de façon à former une boucle à au moins l'une des extrémités d'accrochage, le corps ayant en section des dimensions déterminées dans une zone contiguë à la boucle. Elle est caractérisée par le fait que la boucle est formée autour d'un noyau de renflement qui est emprisonné à l'intérieur de la boucle, de telle façon qu'au moins localement, selon une direction donnée, la boucle présente en section une dimension supérieure à la dimension de la zone contiguë du corps.
La figure 1 est une vue de côté d'un rayon selon un premier mode de mise en oeuvre de l'invention.
La figure 2 est une vue de face du rayon de la figure 1.
La figure 3 illustre schématiquement un mode de fabrication préféré du rayon des figures 1 et 2.
La figure 4 représente en°perspective les deux éléments d'un embout d'accrochage utilisable avec le rayon des figures 1 et 2.
La figure 5 montre en coupe l'extrémité d'un rayon retenue dans un embout d'accrochage.
La figure 6 représente en coupe le profil d'une jante utilisable avec l'embout des figures 3 et 4.
La figure 7 est une vue de côté d'un corps de moyeu utilisable avec le rayon des figures 1 et 2.
La figure 8 montre en coupe l'extrémité d'un rayon retenu dans un logement du corps de moyeu de la figure 7.
La figure 9 illustre de façon schématique l'accrochage d'un rayon à la jante et au moyeu d'une roue.
Les figures 10 à 12 sont relatives à des variantes de réalisation du rayon.
La figure 13 illustre une variante de réalisation du corps de moyeu.

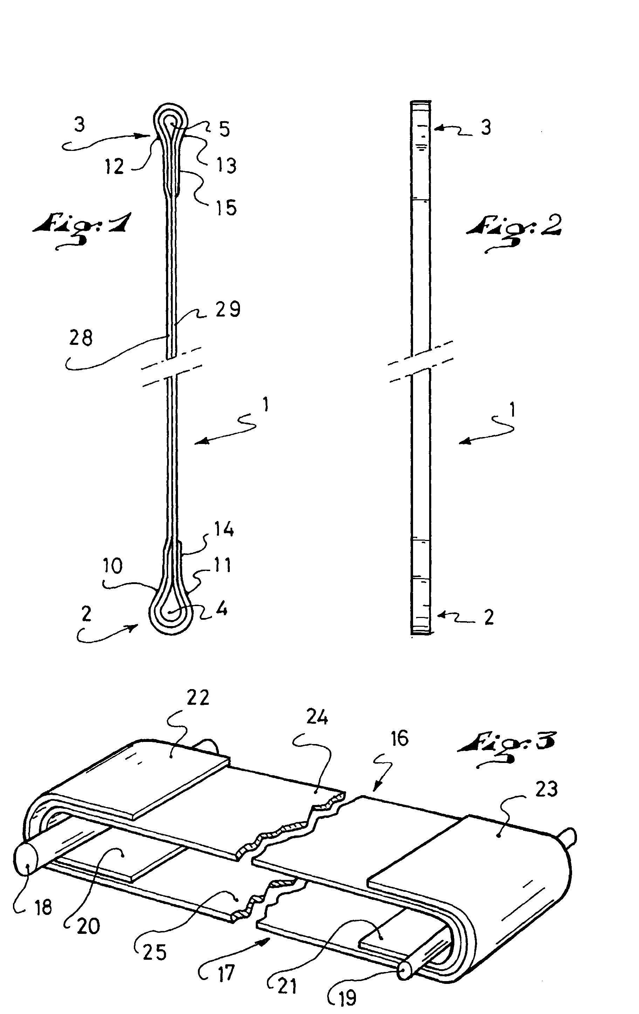

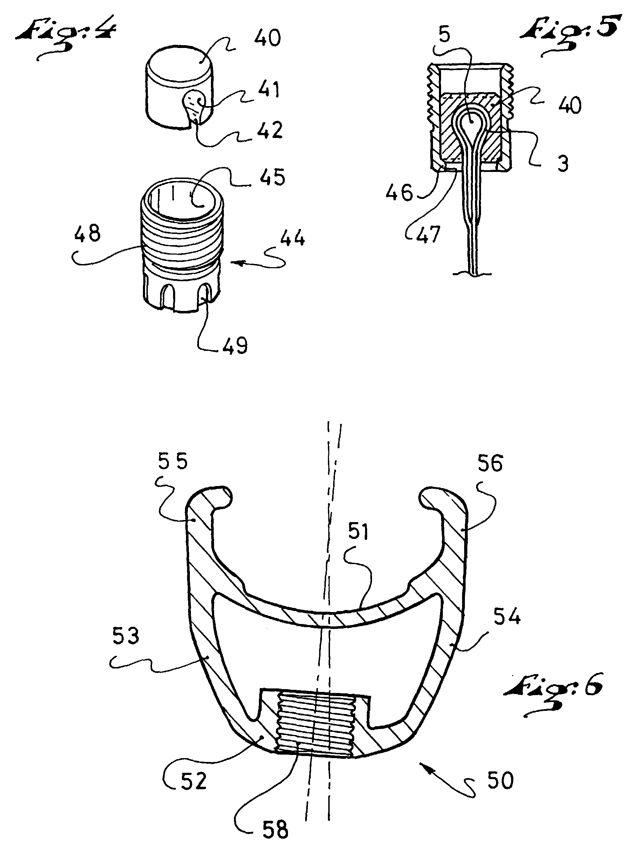

Les figures 1 et 2 montrent un rayon selon un premier mode de mise en oeuvre de l'invention. Le rayon représenté comprend un corps médian 1 allongé et prolongé de chaque côté par une extrémité d'accrochage 2 et 3. Le rayon est réalisé en un matériau composite. Ce matériau comprend des fibres, notamment des fibres de carbone ou des fibres connues sous la dénomination commerciale "KEVLAR", ou un mélange de fibres. Les fibres sont enduites d'une résine de type thermodurcissable, par exemple une résine de type époxy, ou bien encore d'une résine thermoplastique. De préférence, le corps du rayon présente en section une forme aplatie, notamment rectangulaire. La plus petite dimension en section est l'épaisseur du corps, elle est sensiblement constante sur la longueur du corps.

Les extrémités d'accrochage 2 et 3 sont formées selon des boucles, c'est-à-dire qu'à chacune des extrémités, la fibre est retournée ou repliée sur elle-même de façon à former une boucle, et on réalise l'accrochage du rayon par l'intermédiaire de ces boucles. Selon l'invention, les boucles d'accrochage 2 et 3 sont formées autour d'un noyau de renflement 4, 5. Les noyaux de renflement sont emprisonnés dans la boucle et ils remplissent l'intérieur des boucles. De ce fait, comme cela est visible dans la figure 1, les extrémités d'accrochage 2 et 3 sont renflées et présentent en section des épaisseurs supérieures à celles du corps 1.

Les noyaux de renflement sont de toute nature appropriée, par exemple il peut s'agir d'un segment de jonc en résine armée de fibre, de même nature ou non que le reste du rayon. Ce peut être également un segment d'une tige métallique.

En section, le noyau présente une forme circulaire, ou bien, tel que cela est représenté, une forme effilée dans la direction du corps.

De préférence, l'un des noyaux de remplissage présente en section une épaisseur supérieure à celle de l'autre noyau, de façon que l'une des extrémités d'accrochage apparaisse plus grosse que l'autre. La raison de cette différence de taille sera décrite ultérieurement.

Comme cela apparaîtra plus clairement dans la suite, les extrémités d'accrochage du rayon sont retenues non pas par l'intérieur des boucles, mais par l'extérieur, dans les zones de retenue où l'épaisseur du rayon augmente du fait du renflement. Ces zones sont repérées en 10 et 11 pour l'extrémité 2, et en 12 et 13 pour l'extrémité 3.

De préférence, les zones de retenue 10, 11 et 12, 13 sont réalisées comme des faces sensiblement planes ayant une pente de 15 à 45, de préférence de 20 à 30 degrés par rapport à la direction longitudinale du corps. Ces faces pentues sont obtenues ou bien par une section effilée appropriée des noyaux de renflement, ou bien par une mise en forme à la réalisation du rayon, en favorisant le fluage de la résine.

Un tel mode d'accrochage est avantageux car aux extrémités d'accrochage, les zones les plus sollicitées lorsque le rayon est sous tension sont les zones de recouvrement 14, 15 du corps contiguës aux boucles et non la partie coudée de l'extrémité des boucles. Les appuis dans ces zones sont plus faciles à maîtriser. Egalement, la pente des faces d'appui favorise le pincement du corps dans ces zones de recouvrement, permet une meilleure répartition des contraintes de retenue dans le rayon et retarde le délaminage du corps dans ces zones.

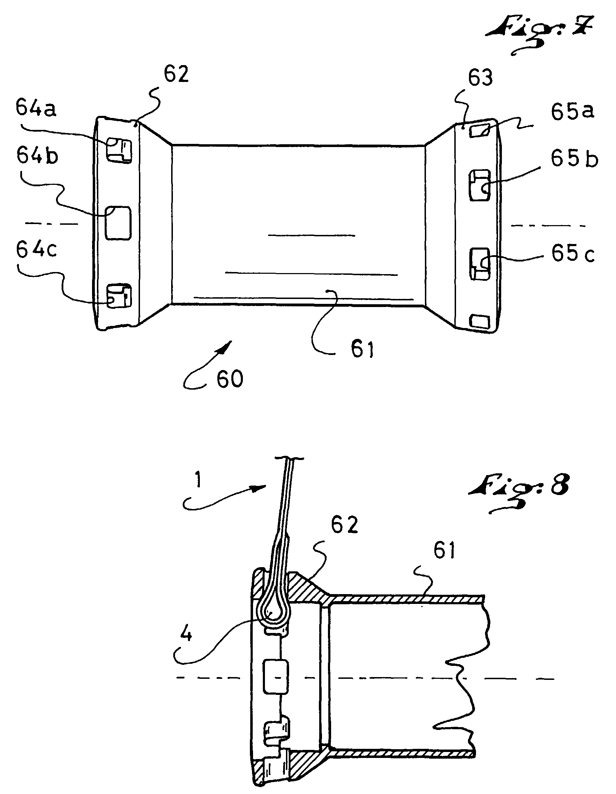

La figure 3 représente de façon schématique un mode de réalisation de rayons tel que celui représenté dans les figures 1 et 2. Deux nappes 16 et 17 de fibres pré-imprégnées de résine sont mises en oeuvre, ainsi que deux joncs 18 et 19.

Les deux joncs sont placés en vis à vis à une distance appropriée l'un de l'autre. Une première nappe 16 est étendue, avec ses deux bords 20 et 21 repliés autour des joncs 18 et 19. Une seconde nappe est étendue sur l'autre côtés des joncs, ses bords 22 et 23 sont repliés autour des joncs 18, 19 et recouvrent partiellement la partie médiane de la première nappe. Dans la zone des joncs, les deux nappes se recouvrent mutuellement au niveau des boucles d'accrochage et des zones de recouvrement contiguës. Cette ébauche est placée dans un moule qui réalise sa mise en forme et la cuisson de la résine. Dans le moule, les nappes et les joncs sont pressés les uns sur les autres, en particulier, les parties médianes 24 et 25 des nappes sont accolées l'une contre l'autre. Lorsque les joncs sont en matériau composite, on peut prévoir de réaliser simultanément la cuisson de la résine des joncs et celle des nappes.

Une fois la cuisson effectuée, l'ensemble est découpé dans le sens de la longueur des nappes pour donner des rayons individuels. La découpe est réalisée avec une scie à fil, à disque diamanté, un laser au CO₂, un jet d'eau à très haute pression, ou tout autre moyen approprié.

De cette façon un rayon tel que celui de la figure 1 est formé par deux rubans 28, 29 dont les parties médianes sont accolées l'une à l'autre pour former le corps 1 du rayon, et dont les extrémités sont repliées et se recouvrent mutuellement autour des segments découpés des joncs pour former les extrémités d'accrochage 2 et 3. La représentation de la figure 1 est schématique, en effet, après la cuisson de la résine, il est difficile de discerner la séparation entre les différentes couches. Il est également difficile de discerner les variations d'épaisseur dans les zones de recouvrement, en effet, la résine a tendance à fluer, ce qui produit une variation d'épaisseur relativement progressive. Pour favoriser cette progressivité, il est possible de mettre en oeuvre des nappes formées de couches superposées qui présentent dans le sens de la longueur des rubans une dimension décroissante, de façon à présenter un rebord d'extrémité dégradé. Il est également possible de maîtriser cette progressivité ainsi que la pente des zones de retenue par une forme appropriée du moule de cuisson.

Eventuellement, on peut prévoir de renforcer les extrémités d'accrochage par des épaisseurs additionnelles de fibres rapportées sur l'extérieur des boucles d'accrochage, en particulier dans les zones de retenue et les zones de recouvrement.

De nombreuses variantes sont possibles pour réaliser les rayons. Par exemple, on pourrait placer plusieurs couches de fibres de chaque côté des joncs, et alterner le recouvrement des bords des différentes couches. On pourrait aussi réaliser individuellement les rayons à partir de rubans. Les deux nappes pourraient être remplacées par une nappe unique. Au lieu d'une ou plusieurs nappes, on pourrait enrouler un fil enduit de résine selon un enroulement circonférentiel ou bien un enroulement hélicoïdal autour des deux joncs maintenus espacés, de façon à réaliser l'ébauche comme un bobinage continu.

En mettant en oeuvre le mode de fabrication qui a été décrit ci-dessus, on a réalisé des rayon à partir d'une nappe constituée de fibres de carbone imprégnée d'une résine de type époxyde. Les rayons avaient une longueur de 255 millimètres. Une section du corps mesurait 4,5 millimètres en largeur et 1 millimètre en épaisseur. Les zones de recouvrement avaient une longueur de 23 millimètres environ. Les boucles d'accrochage avaient pour plus grande épaisseur 7 millimètres pour la plus grosse et 4 millimètres pour la plus petite. La résistance à la rupture était de l'ordre de 300 daNewtons. Naturellement, ces chiffres ne sont donnés qu'à titre indicatif.

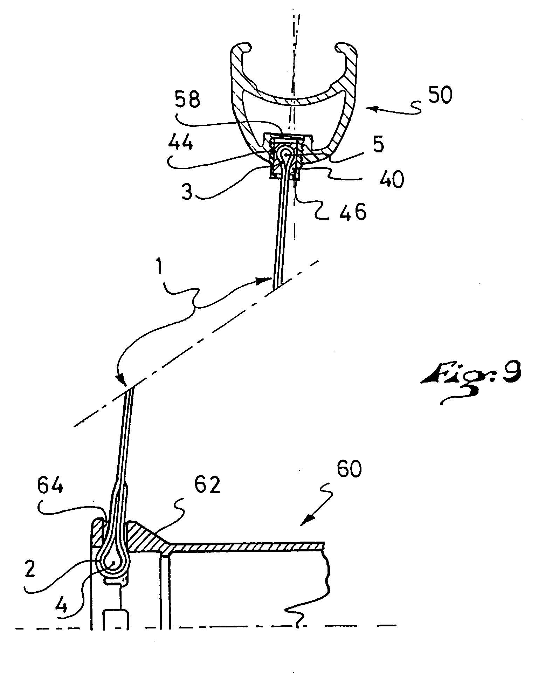

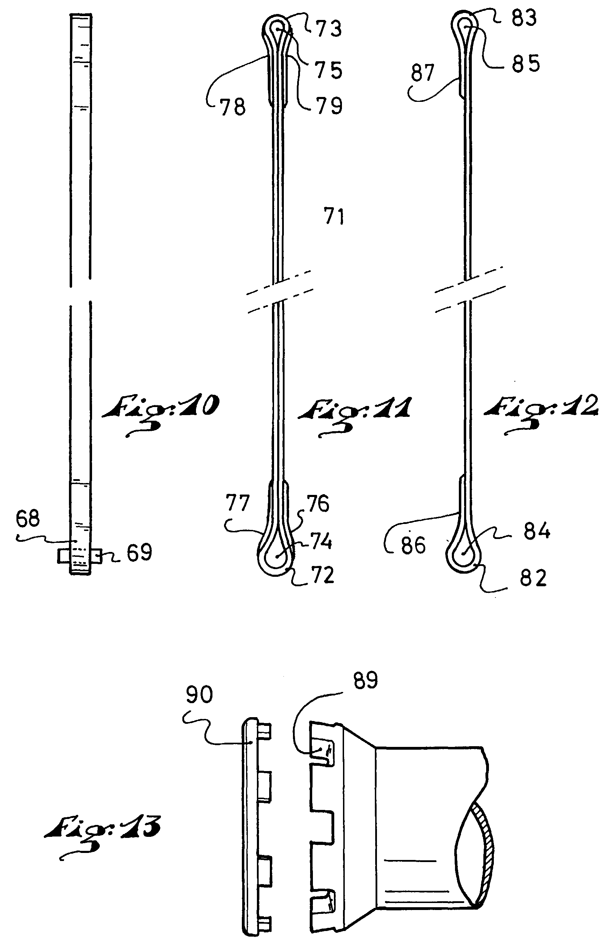

Les figures 4 et 5 représentent un embout d'accrochage compatible avec le rayon qui vient d'être décrit. De préférence, cet embout est prévu pour l'accrochage de la petite boucle, c'est-à-dire la boucle 3. L'embout présente une tête 40 de forme cylindrique de révolution qui est prévue pour s'orienter dans le prolongement du corps de rayon selon une direction diamétrale. La tête présente un évidement transversal 41 qui la traverse de part en part. L'évidement présente une forme et des dimensions intérieures qui correspondent sensiblement à la forme et aux dimensions de la boucle 3 du rayon. Le diamètre de la tête est tel que la boucle 3 peut se loger entièrement dans l'évidement 41 sans déborder. L'évidement débouche vers une extrémité de la tête par une embouchure 42. Comme cela est visible dans la figure 5, l'embouchure 42 présente une largeur sensiblement égale à l'épaisseur du rayon dans la zone contiguë à la boucle 3 du rayon.

L'embout comprend par ailleurs une vis creuse 44. La vis 44 présente un évidement cylindrique 45 de même diamètre que la tête 40. En profondeur, l'évidement présente de préférence une dimension supérieure à la hauteur de la tête 4. Vers le bas, la vis creuse a un épaulement 46 prévu pour retenir la tête. L'épaulement délimite un orifice central 47 dont le diamètre est suffisant pour qu'il puisse être traversé par le corps du rayon. Le diamètre est également suffisant pour permettre le passage de la petite boucle 3 du rayon.

Sur l'extérieur, la vis creuse présente une portion supérieure 48 filetée, et une portion inférieure 49 qui présente des échancrures prévues pour y accrocher un outil de serrage.

L'opération de montage se déroule de la façon suivante. La vis creuse est enfilée sur le rayon, la boucle 3 est logée dans le logement de la tête 40. La tête est ensuite mise en place dans l'évidement de la vis creuse.

Une jante 50 prévue pour coopérer avec l'embout des figures 4 et 5 est représentée en section en figure 6. Une telle jante est déjà connue en elle même. Elle comprend un caisson délimité par un pont supérieur 51, un pont inférieur 52 et deux parois latérales 53 et 54. Les parois latérales sont prolongées vers l'extérieur par deux ailes 55 et 56 munies de crosses ou tout autre moyen approprié prévu pour l'accrochage du pneu. La particularité de cette jante est que seul le pont inférieur 52 est percé d'orifices tels que l'orifice 58 représenté dans la figure. L'orifice 58 est percé selon une technique de perçage par refoulement, qui consiste à repousser la matière pour former une sorte de cheminée dont l'intérieur est ensuite taraudé au diamètre et au pas de la portion filetée 48 de la vis creuse 44. Les orifices d'accrochage des embouts sont orientés par rapport au plan médian de la jante alternativement selon les deux directions prises par les rayons de chacune des nappes une fois la roue montée. Le pont supérieur 51 n'est percé que d'un seul orifice pour le passage de la valve.

Naturellement, le profil de jante qui vient d'être décrit n'est pas limitatif, et d'autres profils pourraient convenir.

La figure 7 représente un corps de moyeu 60 prévu pour recevoir les rayons composite de l'invention. Le corps de moyeu présente une partie médiane 61 et deux joues latérales 62 et 63 ouvertes vers l'extérieur. Ces éléments sont globalement cylindriques de révolution autour de la direction axiale du moyeu. Les joues latérales présentent de préférence une paroi tronconique dont la surface est perpendiculaire à la direction prise par les rayons, une fois la roue montée. Au niveau de ces parois, les joues ont des perçages 64a, 64b, 64c..., 65a, 65b, 65c..... qui présentent en section une grande dimension située dans un plan perpendiculaire à la direction axiale du moyeu, et une petite dimension dans une direction perpendiculaire. Selon la figure, les perçages présentent globalement une ouverture rectangulaire avec des bords parallèles. La plus grande dimension de l'ouverture est sensiblement égale à la largeur d'un rayon. La plus petite dimension est plus grande que l'épaisseur de la petite boucle 3 du rayon, mais plus petite que l'épaisseur de la plus grosse boucle 2 du rayon. De cette façon, un rayon est accroché en l'enfilant par la petite boucle dans une ouverture, de l'intérieur vers l'extérieur de la joue. La grosse boucle du rayon est retenue par les rebords de l'ouverture. De préférence, à l'intérieur des joues, les rebords de l'ouverture sont aménagés de façon à offrir aux zones d'appui de la grosse boucle d'accrochage au moins localement des surfaces d'appui sensiblement de même pente, c'est-à-dire comprise entre 15 et 45 degrés par rapport à la direction de perçage de l'ouverture.

Il va de soi que le corps de moyeu peut être par ailleurs pourvu de roulements, rondelles, écrous, axe et autres éléments connus de façon à réaliser un moyeu prêt à être assemblé à la fourche d'une bicyclette.

La figure 9 schématise le montage de la roue avec les éléments qui ont été décrits. Dans un premier temps les rayons 1 sont enfilés, la petite boucle la première, dans les ouvertures des perçages 64 du corps de moyeu. De ce fait, ils sont retenus au corps de moyeu par la grosse boucle. Sur la petite boucle, on enfile ensuite la vis creuse 44, avec son épaulement en premier, puis on engage la petite boucle dans le logement de la tête 40 de l'embout. La tête est insérée dans l'évidement de la vis creuse. La vis creuse est alors vissée au moyen d'un outil approprié dans un orifice taraudé 58 de la jante. Eventuellement, on peut prévoir de retenir le corps du rayon dans la zone contiguë à l'embout d'accrochage de façon que la rotation de la vis creuse ne provoque pas de vrillage du rayon, en particulier lorsque la tension devient élevée.

Avantageusement, pour la roue ainsi réalisée, la plus petite dimension des rayons est située dans la direction d'avancement de la roue. Les rayons offrent donc une résistance réduite à l'air.

Compte tenu de la grande résistance à l'étirement des rayons composite, et de leur mode d'accrochage, la roue ainsi réalisée est remarquablement rigide en flexion frontale et en flexion latérale.

La figure 10 illustre une variante de réalisation du rayon. La grosse boucle 68 du rayon est formée autour d'un noyau qui déborde de chaque côté du rayon. Le noyau est par exemple formé par un segment de tige métallique 69 emprisonnée à l'intérieur de la boucle avec les deux extrémités en saillie. Un telle variante modifie le mode d'accrochage du rayon au corps de moyeu. En effet, les extrémités débordantes du noyau sont prévues pour prendre appui sous les rebords de petite dimension d'un perçage du moyeu. Selon l'épaisseur donnée à la boucle et selon la dimension des perçages, il est possible d'accrocher le rayon au corps de moyeu par les extrémités du noyau. Néanmoins, si les extrémités se matent sous l'effet de la tension ou de la fatigue, la grosse boucle vient s'asseoir dans le perçage comme cela a été décrit précédemment.

Pour un tel rayon, il est également possible de prévoir dès l'origine un double appui par les extrémités du noyau et par les zones de retenue de la grosse boucle.

Selon la variante de la figure 11, le rayon est formé à partir d'un bobinage continu d'une fibre enduite de résine. En particulier, il n'y a plus de zones de recouvrement. Le rayon présente une structure de même type que celui de la figure 1, avec un corps 71 et deux boucles d'accrochage 72 et 73 formées autour d'un noyau 74, 75. Dans la figure on a représenté également deux bandes de renfort 76, 77 et 78, 79 situées dans les zones de retenue des boucles. Ces bandes permettent une meilleure répartition des efforts dus à la retenue de la boucle. D'autres moyens pourraient également convenir.

La figure 12 représente une autre variante d'un rayon. Le rayon est ici formé par un seul ruban ou une seule nappe dont les bords sont repliés de façon à former les deux boucles d'accrochage 82 et 83 autour des noyaux 84 et 85. La structure du rayon est dissymétrique, avec d'un côté des zones de recouvrement 86 et 87 du reste de la nappe. Pour cette variante, on compte sur le pincement des zones de retenue pour maintenir la cohérence du rayon dans les zones de recouvrement.

La figure 13 est relative à une variante de réalisation du corps de moyeu. Au lieu d'être refermées sur elles-mêmes, les ouvertures 89 des perçages sont ouvertes sur l'extérieur. Une fois les rayons mis en place, les ouvertures sont refermées par un flasque 90 rapporté à l'extrémité du corps de moyeu.

Naturellement, la présente description n'est donnée qu'à titre indicatif, et l'on pourrait adopter d'autres mises en oeuvre de l'invention sans pour autant sortir du cadre de celle-ci.

En particulier, il va de soi que les différents rayons de l'invention pourraient être utilisés avec d'autres embouts d'accrochage, jante et/ou corps de moyeu que ceux qui ont été décrits.

Egalement, les rayons peuvent être prévus pour réaliser aussi bien une roue avant qu'une roue arrière.

L'invention pourrait aussi être appliquée à un rayon qui aurait une boucle d'accrochage telle que cela a été décrit d'un côté seulement, et qui aurait un autre organe d'accrochage de l'autre côté. Dans ce cas, la boucle d'accrochage qui serait réalisée pourrait être aussi bien utilisée pour l'accrochage au moyeu que l'accrochage à la jante.

## Revendications

1. Rayon composite pour une roue à rayons comprenant un corps médian (1) allongé et deux extrémités d'accrochage (2, 3) réalisés en fibres enduites de résine, les fibres étant disposées de façon à former une boucle à au moins l'une des extrémités d'accrochage, le corps ayant en section des dimensions déterminées dans une zone contiguë à la boucle, caractérisé par le fait que la boucle est formée autour d'un noyau de renflement (4, 5) qui est emprisonné à l'intérieur de la boucle, de telle façon que la boucle soit pleine et qu'au moins localement, selon une direction transversale, elle présente en section une dimension supérieure à la dimension de la zone contiguë du corps.

2. Rayon selon la revendication 1, caractérisé par le fait que le noyau de renflement (4, 5) est métallique.

3. Rayon selon la revendication 1, caractérisé par le fait que le noyau de renflement (4, 5) est en matériau composite.

4. Rayon selon la revendication 1, caractérisé par le fait que le noyau de renflement (4, 5) est rond.

5. Rayon selon la revendication 1, caractérisé par le fait que le noyau de renflement (4, 5) est effilé en direction de la zone du corps contiguë à la boucle.

6. Rayon selon la revendication 1, caractérisé par le fait qu'il présente des zones de retenue (10, 11, 12, 13) sur l'extérieur de la boucle, dans les zones où une dimension en section de la boucle augmente du fait du renflement, que les zones de retenue sont aménagées comme des faces sensiblement planes ayant une pente de 15 à 45 degrés avec la direction générale du corps.

7. Rayon selon la revendication 6, caractérisé par le fait que les zones de retenue sont renforcées en épaisseur par des bandes de renfort (76, 77, 78, 79).

8. Rayon selon la revendication 1, caractérisé par le fait qu'il présente une boucle (2, 3) à chacune de ses extrémités, et que l'une des boucles (2) est plus grosse que l'autre.

9. Rayon selon la revendication 1, caractérisé par le fait qu'il est formé de deux rubans (28, 29) dont les extrémités sont repliées et se recouvrent mutuellement de façon à former au moins une boucle (2, 3) et une zone de recouvrement (14, 15) contiguë à la boucle.

10. Embout d'accrochage d'un rayon composite de bicyclette tel que défini par l'une quelconque des revendications 1 à 9, caractérisé par le fait qu'il présente une tête cylindrique de révolution (40) comprenant un évidement transversal (41) débouchant vers une extrémité de la tête par une embouchure transversale (42) de section réduite par rapport à la dimension maximale en épaisseur du logement, et une vis creuse (44) filetée extérieurement sur au moins une partie de sa longueur, présentant intérieurement un logement (45) prévu pour recevoir la tête et un épaulement (47) pour la retenir selon une direction axiale.

11. Embout selon la revendication 10, caractérisé par le fait qu'il présente sur l'extérieur une portion supérieure filetée (48) et une portion inférieure qui présente des échancrures prévues pour l'accrochage d'un outil de serrage.

12. Moyeu de roue de bicyclette prévu pour l'accrochage d'un rayon composite tel que défini dans l'une quelconque des revendications 1 à 9 comprenant un corps de moyeu avec une partie médiane (61) et deux joues latérales (62, 63) pourvues à leur périphérie de perçages prévus pour l'accrochage des rayons, caractérisé par le fait que chacun des perçages présente une ouverture (64a, 64b, 64c, 65a, 65b, 65c) qui a une grande dimension orientée dans un plan perpendiculaire à la direction axiale du corps de moyeu, et une petite dimension dans une direction sensiblement perpendiculaire à celle de la grande dimension.

13. Moyeu selon la revendication 12, caractérisé par le fait qu'à l'intérieur des joues, les rebords de l'ouverture sont aménagés pour présenter des surfaces d'appui dont la pente est comprise entre 15 et 45 degrés par rapport à la direction de perçage de l'ouverture.

14. Roue comprenant une jante, un moyeu central et au moins un rayon comprenant un corps médian (1) allongé et deux extrémités d'accrochage (2, 3) réalisés en fibres enduites de résine, les fibres étant disposées de façon à former une boucle à au moins l'une des extrémités d'accrochage, le corps ayant en section des dimensions déterminées dans une zone contiguë à la boucle, caractérisée par le fait que la boucle est formée autour d'un noyau de renflement (4, 5) qui est emprisonné à l'intérieur de la boucle, de telle façon qu'au moins localement, selon une direction donnée, la boucle présente en section une dimension supérieure à la dimension de la zone contiguë du corps.

15. Roue selon la revendication 14, caractérisée par le fait que chacune des boucles est accrochée par des zones de retenue (10, 11, 12, 13) qui sont situées sur l'extérieur de la boucle et où l'épaisseur du rayon augmente du fait du renflement.

16. Roue selon la revendication 14, caractérisée par le fait que le rayon présente deux boucles d'accrochage (2, 3) et qu'une boucle est plus grosse que l'autre.

17. Roue selon la revendication 16, caractérisée par le fait que le moyeu présente un corps de moyeu avec une partie médiane (61) et deux joues latérales (62, 63) percées d'ouvertures (64a, 64b, 64c, 65a, 65b, 65c), qu'au moins un rayon est enfilé la petite boucle (3) la première dans l'ouverture d'une joue du corps de moyeu de l'intérieur vers l'extérieur, que sa grosse boucle (2) est retenue dans l'ouverture, que la petite boucle est logée dans la tête (40) d'un embout d'accrochage, la tête étant cylindrique de révolution, et étant logée dans l'évidement (45) d'une vis creuse (44), en butée contre un épaulement (47), et la vis creuse ayant sur l'extérieur une portion filetée (48) qui est vissée dans un orifice taraudé (58) de la jante (50).
